# EUROPÄISCHE PATENTSCHRIFT

(11) **EP 1 391 704 B1**
(45) Veröffentlichungstag und Bekanntmachung des Hinweises auf die Patenterteilung: **21.07.2010**
(21) Anmeldenummer: 03018300.8
(22) Anmeldetag: 12.08.2003
(51) Int. Cl.: G01F 15/14

(54) **Zählwerk, insbesondere für Wasserzähler, und Verfahren zu seiner Montage**
Meter, in particular water meter, and method for its assembly
Compteur, en particulier compteur d'eau, et procédé d'assemblage correspondant

(30) Priorität: 14.08.2002 DE 10237177
(43) Veröffentlichungstag der Anmeldung: 25.02.2004
(73) Patentinhaber: Hydrometer GmbH, 91522 Ansbach (DE)
(72) Erfinder: Gronauer, Christoph, 90547 Stein (DE); Geissler, Emil, 91555 Feuchtwangen (DE)
(74) Vertreter: Blaumeier, Jörg

(56) Entgegenhaltungen:
- GB-A- 1 342 148
- US-A- 4 598 583

## Beschreibung

Die Erfindung bezieht sich auf ein Zählwerk, insbesondere für Gas- oder Wasserzähler, mit einem Rollen- und Ritzelpaket zur Zählwertanzeige, das über ineinandergreifende, zwischen einer unteren und einer oberen Laufplatte gelagerte Triebe mit einem Messwertaufnehmer verbunden ist und mit einer übergreifenden, mit der unteren Laufplatte verbundenen, zumindest teilweise durchsichtigen Zählwerkshaube, wobei das Rollen- und das Ritzelpaket mit Schaltritzeln an der unteren Laufplatte gelagert ist und die Zählwerkshaube, gleichzeitig die obere Laufplatte bildend, obere Lager aufweist, wobei ein oberes Lager an einem an der Deckplatte angeformten Stift vorgesehen oder direkt in der Unterseite der Deckplatte eingeformt ist

Die Montage eines Zählwerks - man vgl. hierzu beispielsweise die DE 298 06 191 U1 - erfolgte bisher grundsätzlich in der Weise, dass das Rollenpaket das Ritzelpaket mit den Schaltritzeln und die Triebe in die obere Laufplatte eingelegt und die Triebe mit Hilfe von seitlichen Schiebern ausgerichtet und in Position gehalten wurden. Anschließend wurde die untere Laufplatte mit der oberen Laufplatte verrastet, wobei nach diesem Verrasten die Triebe durch die oberen und unteren Lagerstellen gehaltert waren, sodass die seitlichen Schieber entfernt werden konnten. Nachdem die Zeiger und der Anlaufstern aufgesteckt waren, wurde die Zählwerkshaube aufgesetzt und vorzugsweise durch Verrasten mit der unteren Laufplatte verbunden.

Diese Montage ist recht aufwändig und benötigt eine Vielzahl von Einzelbauteilen.

Aus US 4,598,583 ist ein Zählwerk bekannt, mit einem Rollen- und Ritzelpaket zur Zählwerkanzeige, das über ineinandergreifende Triebe mit einem Messwertaufnehmer verbunden ist und mit einer mit einer unteren Laufplatte, auf der die Triebe gelagert sind, abgedeckt ist. Die Triebe selbst sind oberseitig an der Zählwerkshaube gelagert, an der hierzu obere Lager bildende Stifte oder Lager bildende Einformungen vorgesehen sind. Auch bei diesem Zähler gestaltet sich die Montage, insbesondere der Triebe, schwierig.

Der Erfindung liegt daher die Aufgabe zugrunde, ein Zählwerk der eingangs genannten Art so auszugestalten, dass seine Montierbarkeit vereinfacht ist.

Zur Lösung dieser Aufgabe ist erfindungsgemäß vorgesehen, dass die untere Laufplatte mit durchgehenden Ausnehmungen für die Triebe abstützende Montagestifte einer Montageplatte versehen ist, wobei die Ausnehmungen jeweils benachbart zu einem unteren Lager eines jeweiligen Triebs angeordnet sind.

Durch die erfindungsgemäße Ausbildung der Lager an von der Deckplatte der Zählwerkshaube nach unten ragenden Stiften kann die obere Laufplatte völlig eingespart werden, was natürlich zur Folge hat, dass die Lagerung der Rollenpakete und Ritzelpakete an der unteren Laufplatte erfolgen muss.

Dabei bedarf es natürlich auch in diesem Fall zunächst einer Ausrichtung und In-Position-Halterung der Triebe bis diese zwischen den oberen und unteren Lagern gehaltert sind, was aber wegen des Anformens der die Lager aufweisenden Stifte an der Zählwerkshaube nicht mehr durch seitliche Schieber möglich ist.

Aus diesem Grund ist vorgesehen, dass die untere Lagerplatte mit Ausnehmungen für, die Triebe abstützende, Montagestifte einer Montageplatte versehen ist, wobei je Trieb vorzugsweise drei Ausnehmungen für Montagestifte vorgesehen sind. Diese Ausbildung der unteren Lagerplatte mit Ausnehmungen für Montagestifte führt zu einem sehr einfachen Montageverfahren eines erfindungsgemäßen Zählwerks, indem zunächst das Rollenpaket, das Ritzelpaket und die Triebe in die auf einer Montageplatte mit Montagestiften aufgesetzten untere Laufplatte eingelegt werden, wobei die Triebe jeweils durch die Montagestifte parallel zur unteren Laufplatte abgestützt sind und dass nach dem Aufsetzen und Verrasten der Zählwerkshaube das Zählwerk von der Montageplatte einfach abgehoben wird.

Weitere Vorteile, Merkmale und Einzelheiten der Erfindung ergeben sich aus der nachfolgenden Beschreibung eines Ausführungsbeispiels sowie anhand der Zeichnung. Dabei zeigen:

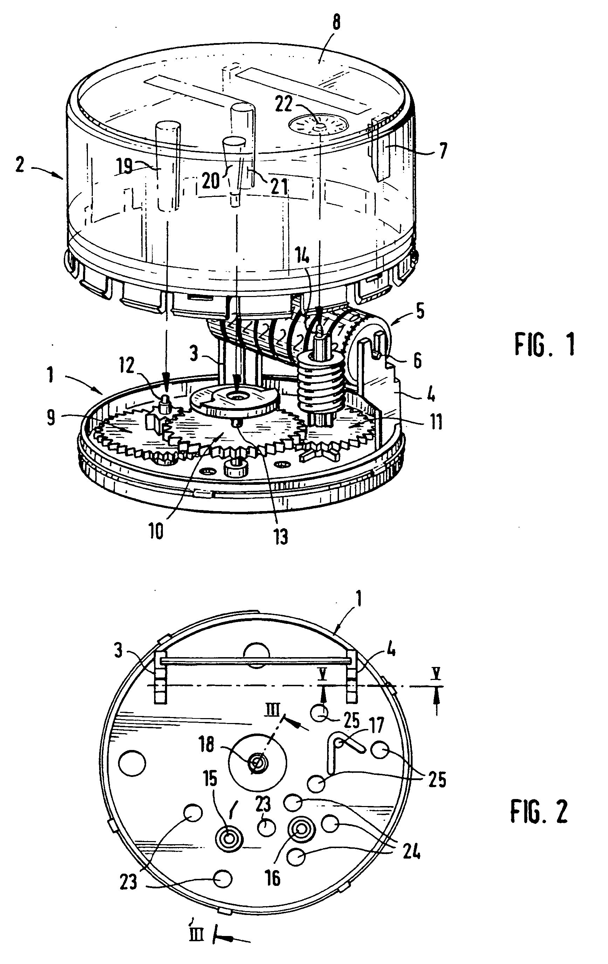

- Fig. 1: eine perspektivische Ansicht eines erfindungsgemäßen Zählwerks mit von der unteren Laufplatte abgenommener Zählwerkshaube,
- Fig. 2: eine Aufsicht auf die untere Laufplatte ohne Rollenpaket, Ritzelpaket und Triebe,
- Fig. 3: einen vergrößerten Teilschnitt durch die Anordnung nach Fig. 1 in der Montagestellung auf einer Montageplatte,
- Fig. 4: einen der Fig. 3 entsprechenden vergrößerten Teilschnitt nach dem Aufrasten der Zählwerkshaube und der Abnahme von der Montage- platte und
- Fig. 5: einen Teilschnitt längs der Linie V-V in Fig. 2.

Das gezeigte Zählwerk umfasst eine untere Laufplatte 1 und eine gleichzeitig die obere Laufplatte bildende Zählwerkshaube 2, die im gezeigten Ausführungsbeispiel vollständig durchsichtig ausgebildet ist. An der unteren Laufplatte 1 sind die Lager 3 und 4 für das Rollen- und Ritzelpaket 5 zur Zählwertanzeige angeformt, wobei mit diesen Lagern 3, 4 eine die Rollenachse 6 stirnseitig übergreifende und damit am Herausfallen hindernde Zunge 7 an der Deckwand 8 der Zählwerkshaube 2 zusammenwirkt. Die verschiedenen Triebe 9, 10 und 11 greifen mit ihren Achsen 12, 13 und 14 jeweils in Lager 15, 16 und 17 ein, wobei ein weiterer, in den Zeichnungen nicht erkennbarer, weil durch den Trieb 10 verdeckter, Trieb mit seiner Achse in ein Lager 18 der unteren Laufplatte eingreift.

Die Zählwerkshaube 2 bildet gleichzeitig die bisher, als separates Bauteil ausgebildete obere Laufplatte für die oberen Lager der Triebe 9, 10 und 11, wozu an der Deckplatte 8 der Zählwerkshaube Stifte 19, 20 und 21 mit Lagern für die oberen Enden der Lagerwellen versehen sind, wobei eines der oberen Lager 22 direkt in der Unterseite der Deckplatte 8 zur Lagerung der Achse 14 des Triebs 11 eingeformt ist.

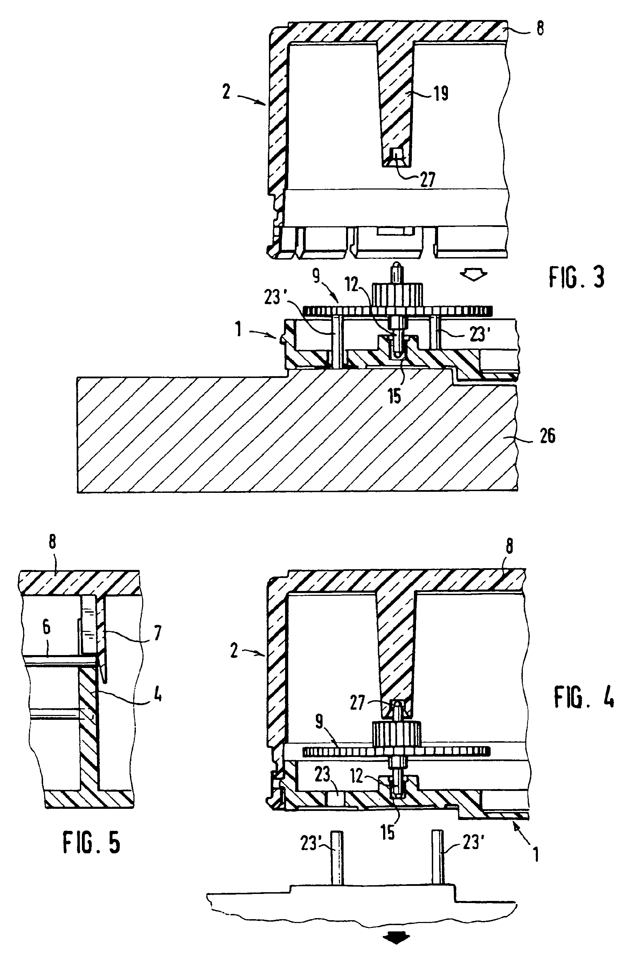

Für jede Lagerstelle 15 bis 17 sind drei sie umgebende Ausnehmungen 23, 24 und 25 vorgesehen, durch welche Montagestifte 23' einer Montageplatte 26 zum Aufsetzen der unteren Laufplatte 1 nach oben ragen. Diese Montagestifte bilden eine Dreipunkt-Auflagerung für die einzelnen Triebe, sodass diese beim Einlegen in die unteren Lager 15, 16 und 17 der unteren Lagerplatte 1 horizontal zu dieser ausgerichtet sind. Dies gewährleistet, dass beim Aufsetzen der Haube die Achsen der Triebe in die oberen Gegenlager 22 bzw. 27 eintreten und somit mit dem Verrasten der Zählwerkshaube die endgültige Lagerung auch der Triebe hergestellt ist, ohne dass hierfür eine gesonderte obere Laufplatte erforderlich ist, wie beim Stand der Technik. Nach dem Verrasten wird die Montageplatte (man vergleiche insbesondere Fig. 4) nach unten abgezogen.

## Patentansprüche

1. Zählwerk, insbesondere für Gas- oder Wasserzähler, mit einem Rollen- und Ritzelpaket, zur Zählwertanzeige, das über ineinandergreifende, zwischen einer unteren und einer oberen Laufplatte gelagerte Triebe mit einem Messwertaufnehmer verbunden ist und mit einer übergreifenden, mit der unteren Laufplatte verbundenen, zumindest teilweise durchsichtigen Zählwerkshaube, wobei das Rollen- und das Ritzelpaket (5) mit Schaltritzeln an der unteren Laufplatte (1) gelagert ist und die Zählwerkshaube, gleichzeitig die obere Laufplatte bildend, obere Lager (22, 27) aufweist, wobei ein oberes Lager an einem an der Deckplatte (8) angeformten Stift (19, 20, 21) vorgesehen oder direkt in der Unterseite der Deckplatte (8) eingeformt ist, **dadurch gekennzeichnet, dass** die untere Laufplatte mit durchgehenden Ausnehmungen (23, 24, 25) für die Triebe (9, 10, 11) abstützende Montagestifte (23') einer Montageplatte (26) versehen ist, wobei die Ausnehmungen (23, 24, 25) jeweils benachbart zu einem unteren Lager (15, 16, 17) eines jeweiligen Triebs (9, 10, 11) angeordnet sind.

2. Zählwerk nach Anspruch 1, **dadurch gekennzeichnet, dass** je Trieb (9, 10, 11) drei Ausnehmungen (23, 24, 25) für die Montagestifte vorgesehen sind.

3. Zählwerk nach einem der Anspruch 1 oder 2, **dadurch gekennzeichnet, dass** die Verbindung zwischen der unteren Laufplatte (1) und der Zählwerkhaube (2) als Rastverbindung ausgebildet ist.

4. Verfahren zur Montage eines Zählwerks nach einem der Ansprüche 1 bis 3, **dadurch gekennzeichnet, dass** das Rollen- und Ritzelpaket (5) und die Triebe (9, 10, 11) in die, auf einer Montageplatte (26) mit Montagestiften (23') aufgesetzten, untere Laufplatte (1) eingelegt werden, wobei die Triebe (9, 10, 11) jeweils durch die Montagestifte (23') parallel zur unteren Laufplatte (1) abgestützt sind und dass nach dem Aufsetzen und Verrasten der Zählwerkshaube (2) das Zählwerk von der Montageplatte (26) abgenommen wird.

## Claims

1. Meter, especially for gas or water meters, with a roller and pinion unit for the display of meter values, which is connected to a measured-value recorder via interlocking cogs fitted between a lower and an upper bearing plate and with an at least partially transparent meter cover connected to the lower bearing plate, wherein the roller and pinion unit (5) is mounted on the lower bearing plate (1) with switching pinions, and the counter cover, simultaneously forming the upper bearing plate, provides upper bearings (22, 27), wherein an upper bearing is provided on a pin (19, 20, 21) formed onto the cover plate (8) or formed directly into the underside of the cover plate (8),
**characterised in that**
the lower bearing plate is provided with continuous recesses (23, 24, 25) for assembly pins (23') of a assembly board (26) supporting the cogs (9, 10, 11), wherein the recesses (23, 24, 25) are each arranged adjacent to a lower bearing (15, 16, 17) of each cog (9, 10, 11).

2. Meter according to claim 1,
**characterised in that**,
for each cog (9, 10, 11), three recesses (23, 24, 25) are provided for the assembly pins.

3. Meter according to any one of claims 1 or 2,
**characterised in that**
the connection between the lower bearing plate (1) and the counter cover (2) is formed as a locking connection.

4. A method for the assembly of a meter according to any one of claims 1 to 3,
**characterised in that**
the roller and pinion unit (5) and the cogs (9, 10, 11) are inserted into the lower bearing plate (1) attached to an assembly board (26) with assembly pins (23'), wherein the cogs (9, 10, 11) are each supported by the assembly pins (23') parallel to the lower bearing plate (1), and that after the positioning and locking of the meter cover (2), the meter is removed from the assembly board (26).

## Revendications

1. Totalisateur, en particulier pour compteur de gaz ou compteur d'eau, comportant un ensemble de rouleaux et pignons pour l'affichage de la valeur totalisée, lequel ensemble est relié à un enregistreur de valeurs de mesure par l'intermédiaire de rouages engrenant les uns dans les autres, montés dans une plaque mobile inférieure et une plaque mobile supérieure, et comportant un couvercle au moins partiellement transparent, engagé par le dessus et relié à la plaque mobile inférieure, sachant que l'ensemble de rouleaux et pignons (5) est logé avec des pignons de commande sur la plaque mobile inférieure (1), et le couvercle, formant en même temps la plaque mobile supérieure, comporte des paliers supérieurs (22, 27), un des paliers supérieurs étant prévu sur un téton (19, 20, 21) formé sur la plaque de protection (8) ou étant formé directement dans la face inférieure de la plaque de protection (8), **caractérisé en ce que** la plaque mobile inférieure est munie d'évidements (23, 24, 25) débouchants, destinés à recevoir les tétons de montage (23') d'une plaque de montage (26), destinés à supporter les rouages (9, 10, 11), les évidements (23, 24, 25) étant disposés chacun au voisinage d'un palier inférieur (15, 16, 17) d'un rouage (9, 10, 11) respectif.

2. Totalisateur selon la revendication 1, **caractérisé en ce que** pour chaque rouage (9, 10, 11), il est prévu trois évidements (23, 24, 25) pour les tétons de montage.

3. Totalisateur selon la revendication 1 ou 2, **caractérisé en ce que** la liaison entre la plaque mobile inférieure (1) et le couvercle (2) est réalisée sous la forme d'un assemblage par encliquetage.

4. Procédé de montage d'un totalisateur selon l'une quelconque des revendications 1 à 3, **caractérisé en ce que** l'ensemble de rouleaux et pignons (5) et les rouages (9, 10, 11) sont mis en place dans la plaque mobile inférieure (1), posée sur une plaque de montage (26) avec des tétons de montage (23'), les rouages (9, 10, 11) étant mis en appui chacun par les tétons de montage (23') parallèlement à la plaque mobile inférieure (1), et **en ce que**, après la pose et le blocage du couvercle (2), le totalisateur est retiré de la plaque de montage (26).
